# EUROPEAN PATENT APPLICATION

(11) **EP 0 674 404 A1**
(43) Date of publication of application: **27.09.1995**
(21) Application number: 94119676.8
(22) Date of filing: 13.12.1994
(51) Int. Cl.: H04B 10/17

(54) **Optical repeater**

(30) Priority: 23.03.1994 JP 51457/94
(71) Applicant: FUJITSU LIMITED, Kawasaki-shi, Kanagawa 211 (JP)
(72) Inventor: Maki, Takanori, c/o Fujitsu Limited, Kawasaki-shi, Kanagawa 211 (JP); Fujiwara, Haruo, c/o Fujitsu Limited, Kawasaki-shi, Kanagawa 211 (JP)
(74) Representative: Stebbing, Timothy Charles

(57) **Abstract**

When a semiconductor laser (12, 42, 52) that supplies pumping light to a rare-earth-doped optical fiber (11, 41, 51) degrades, the signal light cannot be amplified and a signal light loss occurs in the rare-earth-doped optical fiber. Even when a redundant semiconductor laser configuration is employed, the same will happen if all semiconductor lasers degrade. To avoid this, an optical switch (23, 50, 60) is provided to bypass the rare-earth-doped optical fiber in the event of degradation of the pumping light source.

## Description

The present invention relates to an optical repeater incorporating an optical amplifier that directly amplifies optical signals.

When transmitting optical signals over long distances through fiber-optic transmission cables, the signals weaken with distance due to attenuation in the transmission cables. Therefore, optical repeaters are installed at prescribed intervals to amplify the weakened signals for further transmission. A typical amplifier configuration known for such applications is the optical amplifier that directly amplifies the input optical signal using a rare-earth-doped optical fiber. The rare earth elements which can be used as the dopant include neodymium (Nd), erbium (Er), and praseodymium (Pr). The type of optical amplifier that uses an erbium-doped optical fiber has good amplification in the 1.55 µm region and is commonly used.

Semiconductor lasers are used to supply pumping light to the erbium-doped optical-fibers. Such lasers include 1.48 µm InGaAsP semiconductor lasers, 980 nm InGaAs strained-layer superlattice semiconductor lasers, and 800 nm AlGaAs semiconductor lasers. However, if the pumping semiconductor laser fails, the rare-earth-doped optical-fiber amplifier can no longer function as an amplifier.

To avoid this problem and to prolong the life of optical amplifiers, fiber-optic systems currently in use employ redundant pumping semiconductor lasers. A dual configuration, in which the light source is switched between two semiconductor lasers or a parallel configuration that uses two semiconductor lasers in parallel is often used.

In such a redundant configuration, however, if both of the two semiconductor lasers fail, the optical amplifier can no longer function as an amplifier. In this case, the rare-earth-doped optical fiber could not amplify an input optical signal and would simply let the signal pass through. Furthermore, rare-earth-doped optical fibers attenuate signals more than ordinary optical fibers; therefore, the input optical signal would suffer a loss of more than 10 dB, for example. This loss of optical signal strength would result in a substantial decrease in the optical signal level input to the optical amplifier in the optical repeater at the next stage, making it impossible to amplify the signal while retaining a prescribed S/N ratio. This could eventually cause a system failure.

An embodiment of the present invention may provide an optical repeater that is designed to transmit incoming optical signals without subjecting them to attenuation through a doped optical fiber in the event of the failure of the pumping light source or of all the pumping light sources.

According to the present invention, there is provided an optical repeater comprising a doped optical fiber for optically amplifying the signal light, a pumping light source for generating pumping light to be supplied to the doped optical fiber, and means for bypassing the doped optical fiber in the event of failure of the pumping light source.

In the drawings :
Figure 1 is a block diagram showing an optical repeater according to a first embodiment of the invention;
Figure 2 is a diagram for explaining the operation of the optical repeater according to the invention;
Figure 3 is a block diagram showing an optical repeater according to a second embodiment of the invention; and
Figure 4 is a block diagram showing an optical repeater according to a third embodiment of the invention.

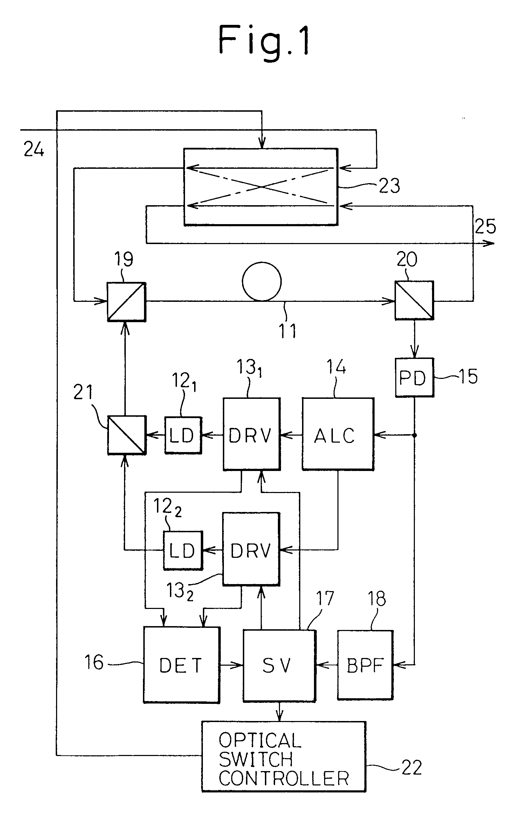

Figure 1 is a diagram illustrating a first embodiment of the present invention, wherein the numeral 11 is an optical fiber doped with a rare earth element such as erbium (Er), 12₁ and 12₂ are semiconductor lasers (LD), 13₁ and 13₂ are drive circuits (DRV), 14 is an automatic level control circuit (ALC), 15 is a photodiode (PD), 16 is a detection circuit (DET), 17 is a supervisory circuit (SV), 18 is a band-pass filter (BPF), 19, 20, and 21 are optical beam-splitters, 22 is an optical switch controller, 23 is an optical switch, and 24 and 25 are fiber-optic transmission lines.

In this embodiment, two semiconductor lasers 12₁, 12₂ are provided, one as the main and the other as the spare, and one or other is switched on for operation. This embodiment uses a forward-pumping-type optical amplifier configuration. The optical switch 23 may be either the type in which optical fibers are moved by mechanical means or the type in which light waveguides and electrodes are formed on an electro-optic crystal substrate for switching light transmission between different light paths. The optical switch controller 22 controls the optical switch 23 to switch between the first path shown by a solid line and the second path shown by a dashed line.

In normal operation, the optical switch 23 is set to provide light transmission through the first path, so that an optical signal received from the previous-stage optical repeater via the fiber-optic transmission line 24 is introduced into the rare-earth-doped optical fiber 11 via the optical beam-splitter 19. When the semiconductor laser 12₁ is used as the main light source, the supervisory circuit 17 controls the drive circuit 13₁ to supply drive current to the semiconductor laser 12₁.

The pumping light from the semiconductor laser 12₁ is fed into the rare-earth-doped optical fiber 11 via the optical beam-splitters 21 and 19 to amplify the optical signal. The amplified optical signal is passed via the optical beam-splitter 20 and through the first path in the optical switch 23, and output to the fiber-optic transmission line 25. In the meantime, that part of the optical signal which is reflected by the optical beam-splitter 20 is converted by the photodiode 15 into an electrical signal, which is applied to the automatic level control circuit 14 and the band-pass filter 18.

The automatic level control circuit 14 controls the drive circuit 13₁ so that the output signal from the photodiode 15 is maintained at a preset level. This controls the pumping light being emitted from the semiconductor laser 12₁, and the optical signal amplified through the rare-earth-doped optical fiber 11 is controlled at a specified level.

When the semiconductor laser 12₁ degrades, the output of the optical signal amplifier cannot be maintained at the specified level even if the drive current is increased. The fact that the drive current exceeds a predetermined value is detected by the detection circuit 16, and the resulting detection signal is fed to the supervisory circuit 17. In response to this detection signal, the supervisory circuit 17 switches the light source from the main to the spare. That is, the drive circuit 13₁ is switched off, and instead, the drive circuit 13₂ is switched on. As a result, the semiconductor laser 12₂ is put into operation, and the pumping light from it is fed into the rare-earth-doped optical fiber 11 to amplify the optical signal.

If this semiconductor laser 12₂ also degrades, and a detection signal indicating that the drive current exceeds the predetermined value is applied to the supervisory circuit 17, the supervisory circuit 17 then supplies an optical amplifier degradation signal to the optical switch controller 22. In response, the optical switch controller 22 controls the optical switch 23 so as to switch the light transmission path from the first path to the second path. As a result, the optical signal from the fiber-optic transmission line 24 bypasses the optical amplifier and is output directly onto the fiber-optic transmission line 25. The optical signal can thus be transmitted to the optical repeater at the next stage without being subjected to attenuation through the rare-earth-doped optical fiber 11.

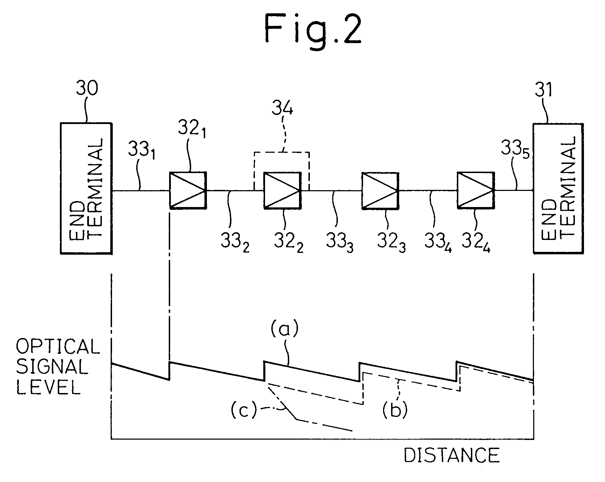

Figure 2 is a diagram for explaining the operation of the optical repeater according to the invention. The diagram shows an example of a light level diagram as well as a long-distance transmission system in which four optical repeaters 32₁ - 32₄ are installed between end terminals 30 and 31 and interconnected by fiber-optic transmission lines 33₁ - 33₅. Each of the optical repeaters 32₁ - 32₄ has a configuration as shown in Figure 1. The optical signal level in normal operation is shown by the solid line (a) in the light level diagram.

For example, if the optical repeater 32₂ degrades, and the optical amplifier therein is bypassed, as shown by the dotted line 34, by the action of the optical switch, the signal level will be as shown by the dotted line (b). In this case, the optical signal input to the next-stage optical repeater 32₃ has suffered transmission loss through the fiber-optic transmission lines 33₂ and 33₃. If the degraded optical amplifier were not bypassed, the resulting signal level would be as shown by the dashed line (c) due to the attenuation through the rare-earth-doped optical fiber constituting the optical amplifier, and as a result, the level of the optical signal input to the next-stage optical repeater would be too low for the repeater to amplify the optical signal while retaining a prescribed S/N ratio.

However, by bypassing the degraded optical amplifier, it is possible to retain the optical signal at the level shown by the dotted line (b) in the light level diagram, and the input optical signal level is sufficient for the next-stage optical repeater 32₃ to amplify the optical signal while retaining the prescribed S/N ratio. In this case, if the amplification gain of the optical amplifier in the optical repeater 32₃ can be increased, the signal level can be brought back to the level shown by the solid line (a) but usually, this is not the case since optical amplifiers generally are not designed with a large margin. In reality, the optical signal is amplified sequentially by optical amplifiers in a plurality of optical repeaters and gradually brought close to the level (a) shown by the solid line.

In the long-distance transmission system in which optical repeaters, each having an optical amplifier for amplifying the optical signal using the rare-earth-doped optical fiber 11, are installed at prescribed intervals, as described above, when any one of the optical amplifier degrades, the degraded optical amplifier is bypassed by the action of the optical switch 23, and the optical signal is amplified sequentially and gradually by the optical amplifiers in the optical repeaters at the later stages. This serves to avoid a system failure.

Further, the optical switch 23 can also be controlled by sending a control signal, superposed on the main signal by amplitude modulation or other techniques, from the end terminals 30 and 31. In that case, the output signal from the photodiode 15 is passed through the band-pass filter 18 to extract the control signal, and this control signal is applied to the supervisory circuit 17 which then supplies the control signal to the optical switch controller 22 to control the optical switch 23. In this manner, the optical amplifier can be bypassed by remote control.

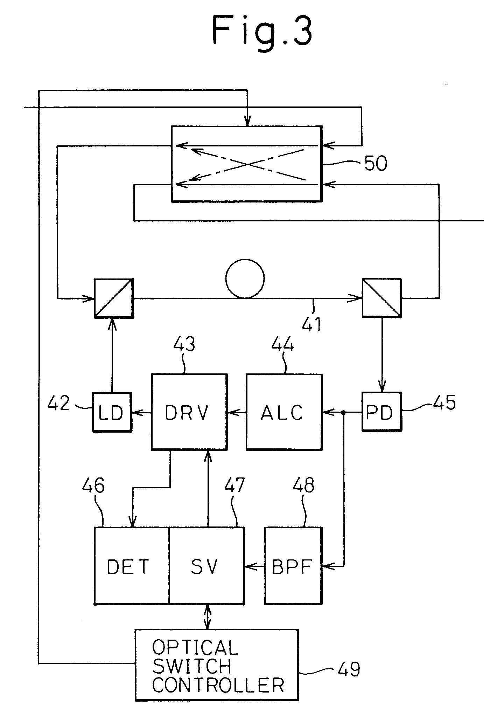

Figure 3 is a diagram illustrating a second embodiment of the present invention, wherein the numeral 41 is a rare-earth-doped optical fiber, 42 is a semiconductor laser (LD), 43 is a drive circuit (DRV), 44 is an automatic level control circuit (ALC), 45 is a photodiode (PD), 46 is a detection circuit (DET), 47 is a supervisory circuit (SV), 48 is a band-pass filter (BPF), 49 is an optical switch controller, and 50 is an optical switch.

This embodiment uses only one semiconductor laser 42 to pump the rare-earth-doped optical fiber 41 which constitutes the optical amplifier, and when degradation of the semiconductor laser 42 is detected by the detection circuit 46, the detection signal is supplied to the supervisory circuit 47 which in turn supplies a control signal to the optical switch controller 49. In response, the optical switch controller 49 controls the optical switch 50 so that the light transmission is switched from the first path, shown by a solid line, to the second path, shown by a dashed line, to bypass the optical amplifier. Thus, according to this embodiment', the reliability of the long-distance transmission system can be enhanced with an optical amplifier configuration which uses only one semiconductor laser 42.

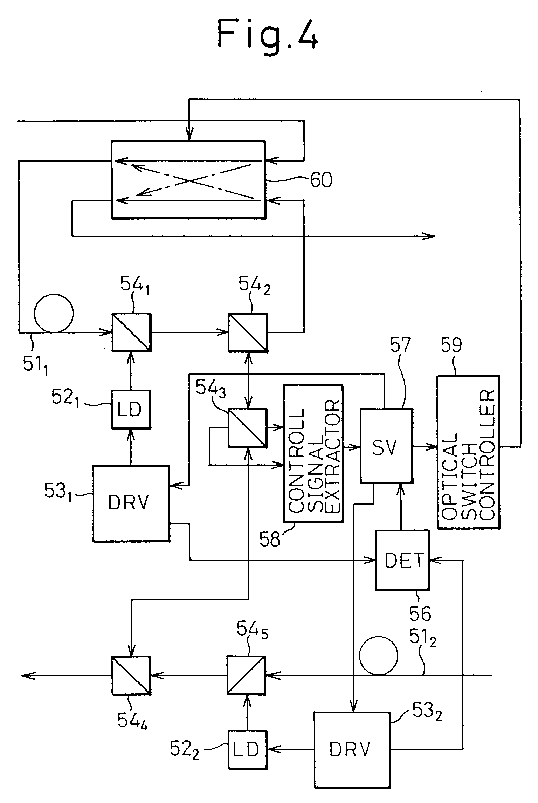

Figure 4 is a diagram illustrating a third embodiment of the present invention, wherein the numerals 51₁ and 51₂ are rare-earth-doped optical fibers, 52₁ and 52₂ are semiconductor lasers (LD), 53₁ and 53₂ are drive circuits (DRV), 54₁ - 54₅ are optical beam-splitters, 56 is a detection circuit (DET), 57 is a supervisory circuit (SV), 58 is a control signal extractor containing a photodiode and a band-pass filter, 59 is an optical switch controller, and 60 is an optical switch. In this embodiment, the output level of the amplified optical signal is controlled at a specified value by using the saturation characteristics of the rare-earth-doped optical fibers 51₁ and 51₂. This embodiment uses a backward pumping-type optical amplifier configuration. In the figure, the optical switch for bypassing the optical amplifier constructed from the rare-earth-doped optical fiber 51₂ is not shown.

The detection circuit 56 is provided to detect degradation of the semiconductor lasers 52₁ and 52₂ by detecting the drive currents from the respective drive circuits 53₁ and 53₂. Separate detection circuits may be provided for the respective semiconductor lasers. When degradation of the semiconductor laser 52₁ is detected by the detection circuit 56, the supervisory circuit 57 supplies a degradation detection signal to the optical switch controller 59. In response, the optical switch controller 59 controls the optical switch 60 so as to switch the light path from the first path, shown by a solid line, to the second path, shown by a dashed line, to bypass the optical amplifier constructed from the rare-earth-doped optical fiber 51₁. On the other hand, when degradation of the semiconductor laser 52₂ is detected by the detection circuit 56, the supervisory circuit 57 supplies a degradation detection signal to the optical switch controller 59. In response, the optical switch controller 59 controls the other optical switch not shown to bypass the optical amplifier constructed from the rare-earth-doped optical fiber 51₂. Thus, according to this embodiment, as in the foregoing embodiments, optical signal transmission in a long-distance transmission system can be continued even when laser diode degradation occurs.

The optical beam-splitters 54₂ and 54₄ are provided to reflect the backscattered light back to the end terminal, while the optical beam-splitter 54₃ is used to separate the optical signal containing a control signal from the end terminal and apply it to the control signal extractor 58. The control signal extractor 58 extracts the control signal transmitted by the end terminal, and supplies it to the supervisory circuit 57 which, in accordance with the control signal, performs operations such as controlling the optical switch 60, switching in or out one or other of the drive circuits 53₁, 53₂, or changing the drive conditions for the semiconductor laser 52₁ or 52₂.

The optical amplifier using the rare-earth-doped optical fiber may be implemented in other configurations than those described in the above embodiments. Furthermore, in the embodiment shown in Figure 4 also, the semiconductor lasers 52₁ and 52₂ may be constructed using redundant design techniques. The optical switch configuration is not limited to the one shown in the above embodiments wherein light transmission is switched between the parallel paths shown by solid lines and the paths shown by dashed lines intersecting them, but various other configurations may be employed as long as the switch can be operated to bypass the optical amplifier.

## Claims

1. An optical repeater comprising:
a doped optical fiber for optically amplifying signal light;
a pumping light source for generating pumping light to be supplied to said doped optical fiber; and
means for bypassing said doped optical fiber in the event of degradation of said pumping light source.

2. An optical repeater according to claim 1, further comprising:
a detector for detecting degradation of said pumping light source; and
a controller for controlling said bypassing means so as to bypass said doped optical fiber when said detector detects degradation of said pumping light source.

3. An optical repeater according to claim 2, wherein
said pumping light source consists of a plurality of semiconductor lasers, and
said controller controls said bypassing means to bypass said doped optical fiber when said detector detects degradation of all of said plurality of semiconductor lasers.

4. An optical repeater according to claim 1, further comprising:
a signal extractor for extracting a control signal contained in said signal light; and
a controller for controlling said bypassing means in accordance with said control signal extracted by said signal extractor.

5. An optical repeater according to any preceding claim, wherein said bypassing means includes an optical switch.

6. An optical repeater according to any preceding claim, wherein said pumping light source consists of a single semiconductor laser.

7. An optical repeater according to any of claims 1 to 5, wherein said pumping light source consists of a plurality of semiconductor lasers each selectively operable to generate said pumping light.

8. An optical repeater according to any preceding claim, wherein said doped optical fiber is a rare-earth-doped optical fiber.

9. A transmission system including a plurality of optical repeaters, each as claimed in any preceding claim, interconnected by optical fiber transmission lines.
